# EUROPÄISCHE PATENTSCHRIFT

(11) **EP 1 783 054 B1**
(45) Veröffentlichungstag und Bekanntmachung des Hinweises auf die Patenterteilung: **06.08.2008**
(21) Anmeldenummer: 06020925.1
(22) Anmeldetag: 05.10.2006
(51) Int. Cl.: B65B 39/00, B65B 37/10, B65G 65/46

(54) **Verfahren und Vorrichtung zur dosierten Abgabe von Schüttgut**
Method of and device for the metered delivery of bulk material
Procédé et dispositif pour le dégagement dosé de matière en vrac

(30) Priorität: 06.10.2005 DE 102005048176
(43) Veröffentlichungstag der Anmeldung: 09.05.2007
(73) Patentinhaber: S.S.T.-Schüttguttechnik GmbH, 86899 Landsberg a. Lech (DE)
(72) Erfinder: Linder, Hermann J., 86938 Schondorf (DE); Kibili, Stefan, 86507 Kleinaitingen (DE); Zinz, Dieter, 86199 Augsburg (DE)
(74) Vertreter: Mollekopf, Gerd Willi

(56) Entgegenhaltungen:
- EP-A- 1 582 467
- EP-A1- 0 967 149
- DE-A1- 2 802 265
- DE-C2- 19 962 475

## Beschreibung

Die Erfindung betrifft eine Dosiervorrichtung zum Dosieren von Material, insbesondere von Schüttgut, mit einer Fördereinrichtung, insbesondere mit einem Schneckenförderer, sowie ein Verfahren zum Betrieb einer Dosiervorrichtung.

Bei Dosiervorrichtungen mit einem Schneckenförderer ist es allgemein bekannt, während einer Grobdosierungsphase die Förderschnecke in einem Förderkanal mit hoher Drehzahl anzutreiben, um das zu dosierende Gut möglichst schnell bis knapp unterhalb der zu erreichenden Endmenge zu fördern, während in einer Feindosierungsphase anschließend an die Grobdosierungsphase die Schneckendrehzahl zum Beispiel auf ein Zehntel der vorherigen Drehzahl abgesenkt wird, um bei reduzierter Förderleistung möglichst exakt die gewünschte Endmenge des zu fördernden Materials aus dem Schneckenförderer auszugeben. Eine beispielhafte Steuerung zur Verbesserung der Dosiergenauigkeit beschreibt die DE 43 31 057 C1: Am Boden eines Vorratsbehälters transportiert eine Förderschnecke das zu fördernde Schüttgut vom Vorratsbehälter durch ein Förderrohr, an dessen Vorderseite das zu dosierende Fördergut zur Weiterverarbeitung entnommen wird. In diesem Fall ist der Vorratsbehälter samt Schneckenförderer auf einer Waage angeordnet, so dass die zu dosierende Menge aus der Gewichtsabnahme des geförderten Guts bestimmt wird. Um den Mengenstrom des geförderten Guts zu verstetigen, ist ein Rührwerk oberhalb der Förderschnecke im Vorratsbehälter angeordnet, deren Drehzahl über eine Dosiersteuereinrichtung regelbar ist. Dabei wird zur Erhöhung der Dosiergenauigkeit die Beobachtung ausgenutzt, dass die Förderleistung der Schnecke nicht nur von deren Drehzahl, sondern auch von der Drehzahl des Rührers abhängig ist. Damit wird eine Feinabstimmung der Förderleistung erreicht.

Bei der Abfüllvorrichtung der DE 195 04 240 C1 ist eine Verschlussklappe an der Austrittsöffnung eines Förderrohres mit einer Förderschnecke angeordnet. Im Austrittsbereich des Förderrohres ist ein Stellantrieb zum Öffnen und Schließen der Verschlussklappe angeordnet. Während des Befüllungsvorgangs gibt die Verschlussklappe den Austrittsquerschnitt vollständig frei und zum Beenden des Befüllungsvorgangs wird die Klappe möglichst schnell in die Schließstellung überführt, in der der Austrittsquerschnitt vollständig verschlossen ist.

Die Vorrats- und Dosiereinrichtung der DE 15 31 934 OS kombiniert den Antrieb einer Paddelwelle mit dem einer Dosierschnecke. Die Paddelwelle verläuft im Behälter zur Bevorratung des Schüttguts und durch ihr Inneres ist eine Antriebswelle für die Dosierschnecke geführt. Die Dosierschnecke verläuft vom vorderen Ende der Paddelwelle in einen Förderkanal von dem das Schüttgut ausgeworfen wird.

Bei der DE 199 62 475 C2 ist am vorderen Ende einer Förderschnecke ein Verschlusselement angeordnet. Die Förderschnecke ist axial in einem Förderrohr verschiebbar und zum Abstellen des Materialstroms wird das Verschlusselement mit der Schnecke verschoben, so dass es die Austrittsöffnung des Förderrohres verschließt. Eine ähnliche Vorrichtung ist durch EP-A-0-967 149 bekannt.

Es ist Aufgabe der Erfindung, eine Dosiervorrichtung und ein Dosierverfahren vorzusehen, bei denen eine auf die Grobdosierung folgende Feindosierung besonders genau erfolgen kann.

Diese Aufgabe wird mit den Merkmalen des Anspruchs 1 bzw. 13 gelöst.

Vorteilhafte Ausgestaltungen sind Gegenstand von Unteransprüchen.

Um die Förderf'ähigkeit bei Schneckenförderern zu gewährleisten, ist das Förderrohr nur teilweise mit dem Schüttgut gefüllt, so dass das Schüttgut im Idealfall im Bodenbereich durch die Förderschnecke lediglich nach vorne geschoben wird. Tatsächlich entsteht durch die Förderschnecke nicht nur eine Schubbewegung in axiale Richtung des Rohres, mit den entsprechenden Schüttgutanhäufungen, sondern auch in Umfangsrichtung, so dass das Schüttgut teilweise die Seitenwandung innerhalb des Förderrohres hochgeschoben wird. Selbst in einem Feindosiermodus, bei dem der Schneckenvortrieb reduziert ist, kommt es zu einer schwallartigen Ausschüttung von Schüttgut, bedingt durch den kombinierten axial-radialen Anhäufungseffekt.
Dieser basiert auf den Reibungsmitnahmekräften zwischen der bewegten Wand (axial, radial), die von der Schneckenwendel abgebildet wird, und dem Schüttgut, sowie den Reibungskräften innerhalb des Schüttgutes selbst. Hierbei ist die Anhäufungshöhe unmittelbar an der antreibenden Wendelwand immer am größten, und verläuft je nach verfügbarem Raum in Bewegungsrichtung abfallend. Durch die lokal und zeitlich unkontrollierbare Anordnung des Schüttguts kommt es an der Austrittsseite zu schwallartigen Abwürfen, so dass insgesamt eine Ungleichmäßigkeit der von der Förderschnecke ausgeworfenen Materialmenge auftritt. Die Erfindung setzt besonders an der Austrittstelle der Dosiervorrichtung an, um hier eine Lösung zur Vergleichmäßigung des Materialaustritts an der Ausgabestelle vorzusehen.

Besonders bei Dosiervorrichtungen mit einem Grobdosierbetrieb und einem Feindosierbetrieb wurde weiterhin beobachtet, dass das Dosierverhalten nicht nur von der Art des zu dosierenden Schüttguts abhängt, sondern dass auch bei gleicher Art von Schüttgut je nach Charge, Vorbehandlung oder Bezugsquelle des Schüttguts starke Unterschiede bei der Dosierung auftreten können. Nicht selten erfordert ein Wechsel des Lieferanten für dieselbe Art von Schüttgut eine mechanische Umrüstung des Dosierers oder eine vollständige Neukonfigurierung, um beispielsweise einen vorgegebenen Dosierungstakt auch für das Schüttgut aus der neuen Bezugsquelle zu erreichen.

Gemäß Anspruch 1 wird eine Dosiervorrichtung zum Dosieren von Material vorgesehen, bei der das Material in einem Förderkanal durch ein Förderelement befördert wird. Eine Dosierhilfseinrichtung der Dosiervorrichtung ist beispielsweise während einer Feindosierphase einsetzbar, um an der Austrittseite den Auswurf des durch das Förderelement geförderten Materials zu verstetigen. Die Dosierhilfseinrichtung ist in zumindest zwei Öffnungsstellungen gegenüber der Austrittsöffnung des Förderkanals positionierbar. Die zumindest zwei Öffnungsstellungen ermöglichen jeweils eine Optimierung des Materialausstoßes. Beispielsweise wird der Materialfluss in einer vollständig geöffneten Stellung (weitgehend) freigegeben oder für eine gleichmäßige Grobdosierung freigegeben, während in einer zweiten Stellung eine Vergleichmäßigung eines geringen Materialstroms gewährleistet wird. Ebenso ermöglicht eine Veränderung der Öffnungsstellung oder eine Positionsverschiebung um die Grundposition einer Öffnungsstellung (Grobdosierstellung und/oder Feindosierstellung) die Steuerung oder Regelung des Materialflusses. Es ist somit nicht mehr erforderlich, die Drehzahl eines Förderelements, beispielsweise einer massenträgen Förderschnecke, permanent zu variieren, um einen möglichst gleichmäßigen Materialfluss zu erreichen.

Vorteilhaft erfolgt eine Überführung zwischen den verschiedenen Stellungen der Dosierhilfseinrichtung mittels axialer Verschiebung und/oder ganz besonders vorteilhaft durch eine Verschiebung senkrecht zur Austrittsfläche des Förderkanals.

Vorteilhaft sind die zumindest zwei Öffnungsstellungen dabei bezüglich der Austrittsöffnung des Förderkanals an sich beliebig vorgebbare Stellungen, die jedoch jeweils zueinander unterschiedliche Positionen oder Grundpositionen gegenüber der Austrittsöffnung sind. Vorzugsweise ist die Dosierhilfseinrichtung stufenlos in jeder Stellung zwischen einer Öffnungsweite einstellbar, so dass der Austrittsquerschnitt des Förderkanals zwischen 0 und 100% einstellbar ist, vorteilhaft zwischen zumindest 3%, 5% oder 8% und 100%. 100% Öffnung bedeutet hier, dass das Schüttgut ungehindert oder im Wesentlichen ungehindert durch die Dosierhilfseinrichtung aus dem Förderkanal tritt.

Besonders wenn die Dosierhilfseinrichtung oder zumindest ein Element der Dosierhilfseinrichtung in Abhängigkeit eines vorgegebenen Materialflusses in zumindest einer vom Materialfluss abhängigen und/oder einer den Materialfluss bestimmenden Stellung positionierbar ist, wird eine Materialfluss-Verstetigung erreicht, da sich die Auswurfbedingungen des Schüttguts mit dem Materialfluss ändern. Alternativ oder zusätzlich ist zumindest eine Stellung der Dosierhilfseinrichtung oder zumindest eines Elements davon in Abhängigkeit der Art oder Konsistenz des Schüttguts positionierbar. Damit erfolgt eine einfache Anpassung der Dosiervorrichtung bei Material-, Chargen- oder Lieferantenwechsel. Insbesondere erfolgt das Anfahren der materialfluss- und/oder schüttgutabhängigen Stellung automatisch durch eine Positioniereinheit unter einer entsprechenden Ansteuerung einer Steuereinheit. Beispielsweise ist eine Feindosierstellung und/oder eine Grobdosierstellung abhängig von Materialfluss und/oder Schüttgut. Vorteilhaft hängt eine Schließstellung ebenfalls vom Schüttgut ab. Beispielsweise wird bei grobkörnigem Granulat nicht vollständig geschlossen, um eine Beschädigung der Positioniereinheit, der Lager und/oder eines Stau- oder Absperrelements durch das Einklemmen des Granulats zu vermeiden.

Ist die Positioniereinheit oder umfasst die Positioniereinheit ein druckproportional arbeitendes Stellelement oder ein Aktuator, so kann über die Einstellung des Drucks des Mediums, vorzugsweise Druckluft, die Änderung der Öffnungsstellung auf kostengünstige und konstruktiv einfache Weise realisiert werden. Auch in staubbelasteter oder entzündlicher Umgebung kann so eine Positionsanpassung sicher herbeigeführt werden.

Bei einer vorteilhaften Ausgestaltung ist der Positioniereinheit und/oder der Dosierhilfseinrichtung ein Weg- oder Positionsaufnehmer zugeordnet, mit dem das Anfahren und/oder zumindest das Erreichen der vorgegebenen Öffnungsstellung kontrollierbar oder regelbar ist. Beispielsweise wird das Positionssignal einer Steuereinrichtung zugeführt, die die Positioniereinheit so ansteuert, bis das Positionssignal dem Sollwert entspricht.

Vorteilhaft sind zumindest eine Feindosier- und zumindest eine Grobdosierstellung der Dosierhilfseinrichtung anfahrbar bzw. einstellbar, da sich die Förderbedingungen in einer Feindosierphase und einer Grobdosierphase drastisch unterscheiden. Beispielsweise beträgt der Faktor des Materialflusses zwischen Grobstrom und Feinstrom 20 (z.B. Grobstrom 1000 kg/h und Feinstrom 50 kg/h) was die dynamischen Transportvorgänge im Förderkanal durch das Förderelement wesentlich ändert. Besonders bei langsamer Förderung in der Feindosierphase können sich am Kanalende noch größere Anhäufungen von Material bilden als in der Grobdosierphase bei schneller Kanalförderung.

Vorteilhaft wird die Dosierhilfseinrichtung zumindest zeitweise während des Dosiervorgangs angetrieben, beispielsweise während eines Feindosiervorgangs, wenn die Dosierhilfseinrichtung in der Feindosierstellung positioniert ist. Dieser Antrieb umfasst zum Beispiel ein Drehen, Erregen oder Vibrieren der Dosierhilfseinrichtung oder zumindest eines Teils davon, oder eine Kombination aus Drehen, Erregen oder Vibrieren. Vorteilhaft erfolgt dieser Antrieb der Dosierhilfseinrichtung oder eines Teils davon (z.B. Stauelement) über die Positioniereinrichtung oder mittels eines getrennten Antriebs für die Dosierhilfseinrichtung. Besonders vorteilhaft ist jedoch eine Positioniereinheit vorgesehen, mit der die verschiedenen Öffnungsstellungen der Dosierhilfseinrichtung (vorzugsweise auch der Schließstellung) anfahrbar sind und mit der auch der Antrieb der Dosierhilfseinrichtung erfolgt. Vorzugsweise erfolgt der Antrieb ortsfest, d.h. die Dosierhilfseinrichtung wird nicht oder nicht wesentlich aus ihrer Grundstellung bewegt. Beispielsweise wird die Dosierhilfseinrichtung oder zumindest ein Element der Dosierhilfseinrichtung gedreht. Dabei ändert sich der Drehpunkt der Dosierhilfseinrichtung nicht gegenüber dem Förderkanal.

Vorteilhaft gibt die Dosierhilfseinrichtung, insbesondere ein Stauelement, in der zumindest einen Grobdosierstellung den Öffnungs- bzw. Austrittsquerschnitt des Förderkanals nicht vollständig frei. Der Abstand zwischen Stauelement und Auslass des Kanals ist zum Beispiel so gewählt, dass bei einem schwallartigen Vorschub des Materials durch die Austrittsöffnung dieses teilweise gegen das Stauelement anliegt. Vorteilhaft ist in der Grobdosierstellung des Stauelements höchstens 80% des Austrittsquerschnitts des Förderkanals freigegeben, besonders vorteilhaft höchstens 70%, 60% oder 50%. Alternativ oder zusätzlich beträgt der Abstand des Stauelements zur Austrittsfläche maximal das 1-fache, das 0,8-fache, das 0,6-fache oder das 0,4-fache der oder einer Querschnittsabmessung der Austrittsfläche des Förderkanals.

Vorteilhaft ist in der Feindosierstellung der Dosierhilfseinrichtung der Austrittsquerschnitt des Förderkanals gegenüber dem Austrittsquerschnitt in der Grobdosierstellung um mindestens 30% verkleinert, vorzugsweise um mindestens 50%, 70% oder 80%. Vorteilhaft wird die Dosierhilfseinrichtung, insbesondere ein Stauelement, zumindest in der Feindosierstellung durch die Antriebseinrichtung gedreht, vibriert und/oder erregt, so dass eine weitere Verstetigung des Materialflusses eintritt.

Bei einer vorteilhaften Ausgestaltung ist die Dosierhilfseinrichtung, insbesondere ein Stauelement, in eine Schließstellung überführbar, bei der der Austrittquerschnitt gegenüber der Feindosierstellung noch weiter reduziert oder vollständig geschlossen ist. Damit lässt sich bei Erreichen einer vorgegebenen Dosiermenge der Dosiervorgang schnell und definiert abbrechen. Vorzugsweise ist in der Schließstellung der Austrittsquerschnitt gegenüber der Feindosierstellung um mindestens 40% reduziert, vorzugsweise um mindestens 50%, 60% oder 70%. Selbst bei nicht vollständig geschlossenem Austrittsquerschnitt tritt aufgrund der Selbsthemmung des Schüttguts eine Unterbrechung des Materialflusses ein, wobei die Schließstellung zum Abschließen eines Dosiervorgangs angefahren wird (die gewünschte Menge an Schüttgut wurde aus dem Förderrohr ausgeworfen). Vorzugsweise ist die Dosierhilfseinrichtung zwischen der Feindosierstellung und der Schließstellung kontinuierlich überführbar, zumindest gegen Ende der Feindosierphase. Durch das kontinuierliche Schließen wird eine abrupte Änderung des Schüttgutstroms vermieden, was die Dosierpräzision erhöht. Es wurde auch beobachtet, dass bei Messung der Dosiermenge über eine Waage unter dem Behälter zur Aufnahme des dosierten Schüttguts die abrupte Änderung des Schüttgutstroms zu einer Impulsänderung und damit zu einem Gewichtssprung (Gewichtsverringerung durch Abnahme des auftreffenden Schüttguts) kommt. Dies entfällt bei kontinuierlichem Schließen oder Überführen in die Schließstellung.

Bei einer vorteilhaften Ausgestaltung verläuft durch den Förderkanal ein Antriebselement, welches zum Positionieren und/oder Antreiben oder als Aktuator für eine an der Austrittseite des Förderkanals angeordnete Dosierhilfseinrichtung wirkt. Dadurch, dass das Antriebselement durch den Förderkanal geführt ist, ist es nicht notwendig, an der Austrittseite des Förderkanals oder neben dem Förderkanal Antriebseinrichtungen oder Aktuatoren vorzusehen. Dadurch baut der Förderkanal zur Austrittseite hin besonders klein, so dass beispielsweise eine Vielzahl von Förderkanälen an einer zentralen Mischstelle zusammengeführt werden kann. Vorteilhaft ist das Antriebselement drehbar, erregbar, vibrierbar und/oder in Förderkanalrichtung verschiebbar. In weiterer Ausgestaltung ist das Antriebselement koaxial durch die Fördereinrichtung geführt.

Ganz besonders vorteilhaft ist das Antriebselement eine durch den Förderkanal geführte Welle oder Stange, die drehbar und/oder in Förderkanalrichtung verschiebbar ist. Dadurch wird von der Anfangsseite des Förderkanals her zur Austrittseite des Förderkanals hin eine Drehbewegung übertragbar, mit der die Dosierhilfseinrichtung beispielsweise drehend antreibbar ist. Oder die Dosierhilfseinrichtung ist mittels des verschiebbaren Antriebselements an der Austrittseite verschiebbar oder verstellbar. Ganz besonders vorteilhaft werden sowohl eine Drehbewegung als auch eine Verschiebungsbewegung durch das Antriebselement zu der zumindest einen Dosierhilfseinrichtung übertragen, so dass entweder die Dosierhilfseinrichtung mehrere Freiheitsgrade der Bewegung durchlaufen kann und/oder mehrere Dosierhilfseinrichtungen durch nur ein Antriebselement betätigbar bzw. antreibbar sind.

Bei einer Ausgestaltung ist die im Förderkanal verlaufende Fördereinrichtung eine Schnecke oder Spirale, mittels der das zu dosierende Material im Kanal transportiert wird. Besonders vorteilhaft ist bei dieser Ausgestaltung das Antriebselement innerhalb der Schnecke oder Spirale verlaufend ausgebildet, vorzugsweise koaxial dazu. Dadurch wird der Totraum im Kernbereich der Schnecke oder Spirale ausgenutzt, während deren Umfangsflächen durch das Antriebselement ungehindert an der Wandung des Förderkanals entlangfahren können.

Besonders vorteilhaft ist die durch das Antriebselement angetriebene Dosierhilfseinrichtung ausschließlich am Ausgabeende des Förderelements angeordnet und wirkt zum Weitertransportieren und/oder Vergleichmäßigen des Materialflusses des vom Förderelement im Förderkanal geförderten Materials. Dadurch wird eine Parallelförderung von zu dosierendem Material im Förderkanal unterbunden, so dass der Materialtransport zumindest im Grobbereich auf einfache Weise durch Betätigung des Förderelements steuerbar ist. Vorteilhaft ist die eine Dosierhilfseinrichtung in Förderrichtung nach dem Förderelement angeordnet.

Im Folgenden werden drei Elemente der Dosierhilfseinrichtung beschrieben. Dies soll jedoch nicht bedeuten, dass die Elemente der Dosierhilfseinrichtung nur in Kombination auftreten können. Die einzelnen Ausgestaltungen der Elemente können allein, in Kombination mit einem weiteren Element oder in Kombination von drei Elementen zum Einsatz kommen.

Besonders vorteilhaft ist ein erstes Element der Dosierhilfseinrichtung ein Rührelement und/oder ein zweites Förderelement, durch das eine zusätzliche Bewegung auf das durch das Förderelement transportierte Material übertragen wird. Damit wird eine Vergleichmäßigung der Ausgabe des Materials aus dem Förderkanal erreicht. Beispielsweise wird der Materialfluss verstetigt, wenn die Fördereinrichtung eine Schnecke ist, die das Material unter zeitlichen Schwankungen abgibt, wie oben beschrieben wurde. Durch das zweite Förderelement kann auch durch eine Feinregelung die Abwurfleistung nahezu pulsationsfrei gesteuert werden. Beispielsweise kann das durch das Förderelement durch den Förderkanal transportierte Material unter kurzzeitiger Erhöhung des Materialflusses im Austrittsbereich mittels des zweiten Förderelements schneller ausgeworfen oder durch Reduzierung der Förderleistung im Inneren des Austrittsbereichs kurzfristig zurückgehalten bzw. langsamer ausgeworfen werden. Vorteilhaft ist das erste Element der Dosierhilfseinrichtung stern-, schrauben-, spiral- oder gitterförmig.

In weiterer Ausgestaltung ist ein (zweites) Element der Dosierhilfseinrichtung ein Stau- oder Verschlusselement, mit dem der Materialauswurf aus dem Förderkanal beispielsweise während einer Feindosierphase kontrolliert schüttgutabhängig drosselbar ist und vorzugsweise bei Erreichen der gewünschten Endmenge komplett abstellbar ist-. Beispielsweise verschließt das Verschlusselement die Austrittseite des Förderkanals bei Erreichen der Endmenge. Vorzugsweise ist das Stau- oder Verschlusselement drehbar, beispielsweise durch das Antriebselement. Vorteilhaft weist das Stau- oder Verschlusselement am Umfang eine elastische Dichtlippe auf.

In weiterer Ausgestaltung ist ein (drittes) Element der Dosierhilfseinrichtung ein Fortsatzelement, das an der Austrittseite des Förderkanals angeordnet ist, diesen also über den eigentlichen Förderkanal hinaus verlängert. Ganz besonders vorteilhaft ist dabei das Fortsatzelement durch das Antriebselement drehbar, so dass es ebenfalls oder alternativ zu einer Vergleichmäßigung des durch das Förderelement angelieferten Materialflusses beiträgt. In Ausgestaltung kann das Fortsatzelement ganz oder teilweise um das Förderelement herum gebaut sein. Im Falle einer Schnecke oder Spirale als Fördereinrichtung wirkt dann das sich drehende Fortsatzelement nicht mehr als ruhende Auflagewand für das von der Schnecke oder Spirale geförderte Material und bei geeigneter Wahl der Drehzahl des Fortsatzelements wird ein Hochschieben des geförderten Materials an der Wandung des Fortsatzelements verhindert, was zu einer Vergleichmäßigung des Materialflusses führt. Vorteilhaft ist das Fortsatzelement durch das Antriebselement und/oder das angetriebene Förderelement drehbar. Zusätzlich oder alternativ ist das Fortsatzelement drehbar im Bereich der Austrittseite des Förderkanals gelagert. In weiterer Ausgestaltung ist eine Kopplungseinrichtung zwischen dem Antriebselement und dem Fortsatzelement angeordnet. Vorteilhaft ist das erste und/oder das zweite Element der Dosierhilfseinrichtung Teil der Kopplungseinrichtung.

Bei einer Ausgestaltung werden das Förderelement und das Antriebselement zusammen durch eine Antriebs-/Positioniereinheit angetrieben, so dass kein zusätzlicher Antrieb für das Antriebselement erforderlich ist. Um beispielsweise die Drehzahlen für das Antriebselement und das Förderelement unterschiedlich einzustellen, kann ein Getriebe zwischen dem Förderelement und dem Antriebselement vorgesehen sein. Bei einer alternativen Ausgestaltung wird das Antriebselement durch eine separate Positioniereinheit angetrieben, so dass der Antrieb des Antriebselements unabhängig vom Förderelement erfolgt. Vorteilhaft wird eine axiale Verschiebung der innerhalb des Förderkanals durch eine Hubeinrichtung oder einen Aktuator der Positioniereinheit bewirkt.

Bei einer Ausgestaltung ist an der Eintrittseite des Förderkanals ein Sammelbehälter zum Bevorraten des zu dosierenden Materials angeordnet, insbesondere ist dem Sammelbehälter eine an der Eintrittseite des Förderkanals angeordnete Rühreinrichtung zugeordnet.

Bei einer besonders vorteilhaften Ausgestaltung ist das Antriebselement zusammen mit dem Förderelement aus dem Förderkanal und gegebenenfalls aus einem Sammelbehälter zum Bevorraten des zu dosierenden Materials gemeinsam herausziehbar, so dass sich Wartungsvorgänge an der Dosiervorrichtung vereinfachen. Dies gilt besonders, wenn die gesamte Mechanik zur Antriebs-Eintrittsseite hin ausgefahren werden kann. Vorteilhaft ist die Dosierhilfseinrichtung oder zumindest ein Teil der Elemente der Dosierhilfseinrichtung aus dem Förderkanal herausziehbar, insbesondere einlaufseitig und/oder zusammen mit dem Antriebselement.

In weiterer Ausgestaltung sind die Antriebs-/Positioniereinheiten für das Förderelement und - soweit vorgesehen - das Antriebselement für eine Rühreinrichtung zu einem Antriebsblock zusammengefasst, so dass die Dosiervorrichtung kompakt baut und wartungsfreundlich ausgelegt ist.

Anhand von Figuren wird eine Ausführungsform der Erfindung näher erläutert. Es zeigen:
- Fig.1: eine Querschnittsansicht eines Schneckendosierers,
- Fig. 2: eine Querschnittsansicht eines Feindosierers an der Austrittseite des Schneckendosierers von Fig. 1 in einer ersten Stellung,
- Fig. 3: den Feindosierer von Fig. 2 in einer zweiten Stellung,
- Fig. 4: eine perspektivische Ansicht des Feindosierers in der in Fig. 3 gezeigten Stellung,
- Fig. 5: den Feindosierer von Fig. 2 in einer dritten Stellung,
- Fig. 6: einen Antriebsblock des Schneckendosierers von Fig. 1 bei der in Fig. 5 dargestellten Stellung des Feindosierers,
- Fig. 7: eine perspektivische Darstellung des Schneckendosierers von Fig. 1 in Wartungsposition,
- Fig. 8A und 8B: eine weitere Ausführungsform eines Feindosierers in zwei unterschiedlichen Öffnungsstellungen,
- Fig. 9: eine weitere Ausführungsform eines Feindosierers, und
- Fig. 10: eine Blockdarstellung der Steuerung für den Schneckendosierer.

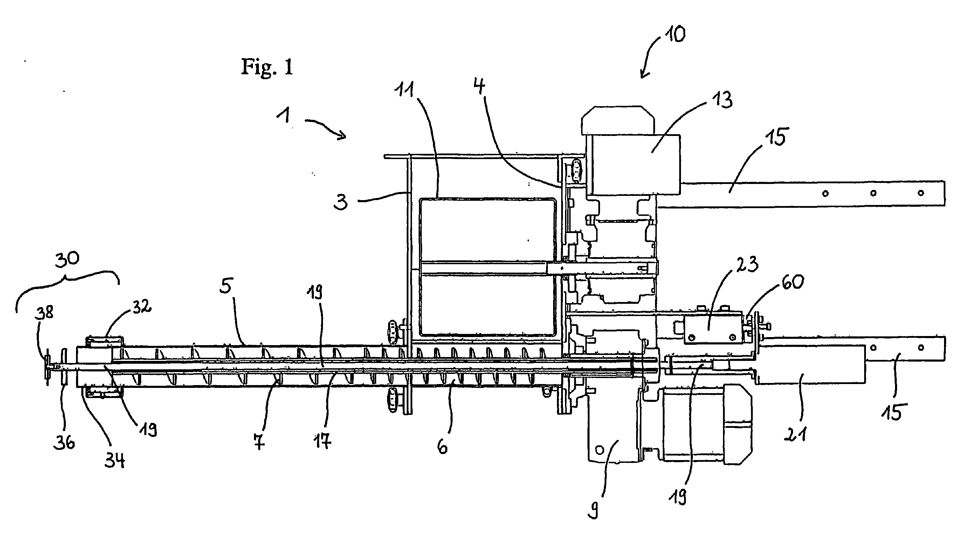

Fig. 1 zeigt eine Querschnittsansicht durch einen Schneckendosierer 1. In einem Vorratsbehälter 3 des Schneckendosierers 1 ist Schüttgut bevorratet, wobei die Kapazität des Vorratsbehälters 3 nach oben hin durch einen weiteren Behälteraufsatz (nicht dargestellt) erweitert sein kann. In einer Bodenrinne 6 des Vorratsbehälters 3 verläuft eine Förderschnecke 7, die sich in ein Förderrohr 5 fortsetzt. Das Schüttgut wird aus dem Vorratsbehälter 3 durch die Förderschnecke 7 in und durch das Förderrohr 5 zur Austrittseite am linken Ende des Förderrohrs 5 gefördert. Der Kern der Förderschnecke 7 ist als Hohlwelle 17 ausgebildet, die sich durch eine Rückwand 4 des Vorratsbehälters 3 erstreckt und die an der Außenseite des Vorratsbehälters 3 durch einen Schneckenantrieb 9 angetrieben wird. Der Schneckenantrieb 9 umfasst einen regelbaren Getriebemotor, wobei die Schnecke im Grobfördermodus wesentlich schneller umläuft als in einem feinen Fördermodus. Beispielsweise beträgt die Drehzahlabstufung einen Faktor 10.

Der Schneckenantrieb 9 ist Teil eines Antriebsblocks 10, der sich rückseitig an den Vorratsbehälter und die Förderschnecke 7 anschließt. Der Antriebsblock 10 umfasst auch einen Rührerantrieb 13, der eine durch die Rückwand 4 geführte Welle antreibt, an deren vorderem Ende ein Rührwerk 11 innerhalb des Vorratsbehälters 3 oberhalb der Bodenrinne 6 bzw. der Förderschnecke 7 angeordnet ist. Das Rührwerk bzw. der Rührer 11 sorgt für eine gleichmäßige Zufuhr oder Bereitstellung von zu förderndem Schüttgut zum Einzugsbereich der Förderschnecke 7.

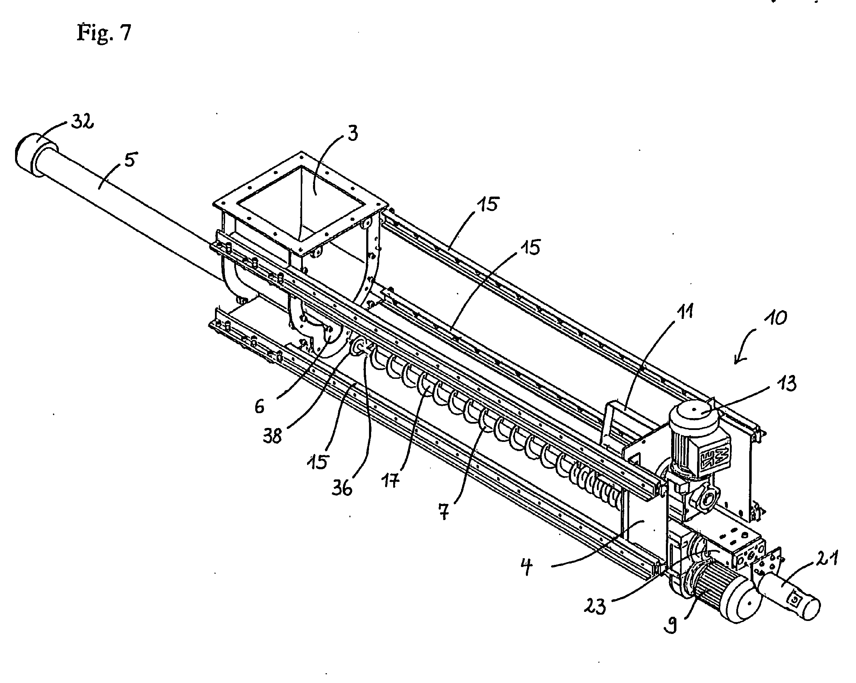

Der Antriebsblock 10 ist an Schienen 15 verfahrbar gelagert, so dass zur Wartung des Schneckendosierers 1 der Antriebsblock 10 zusammen mit der Rückwand 4 und der Förderschnecke 7 sowie dem Rührer 11 aus dem Vorratsbehälter 3 und dem Förderrohr 5 herausfahrbar ist, wie dies die perspektivische Ansicht in Fig. 7 darstellt. Hierzu wird die Verschraubung zwischen den Behälterseitenwänden und der Rückwand 4 gelöst. Nach dem Herausziehen des Antriebsblocks 10 mit der Förderschnecke 7 und dem Rührer 11 können der Behälter 3, das Förderrohr 5, die Förderschnecke 7 und der Rührer 11 auf einfache, montagefreundliche Weise gereinigt bzw. gewartet werden.

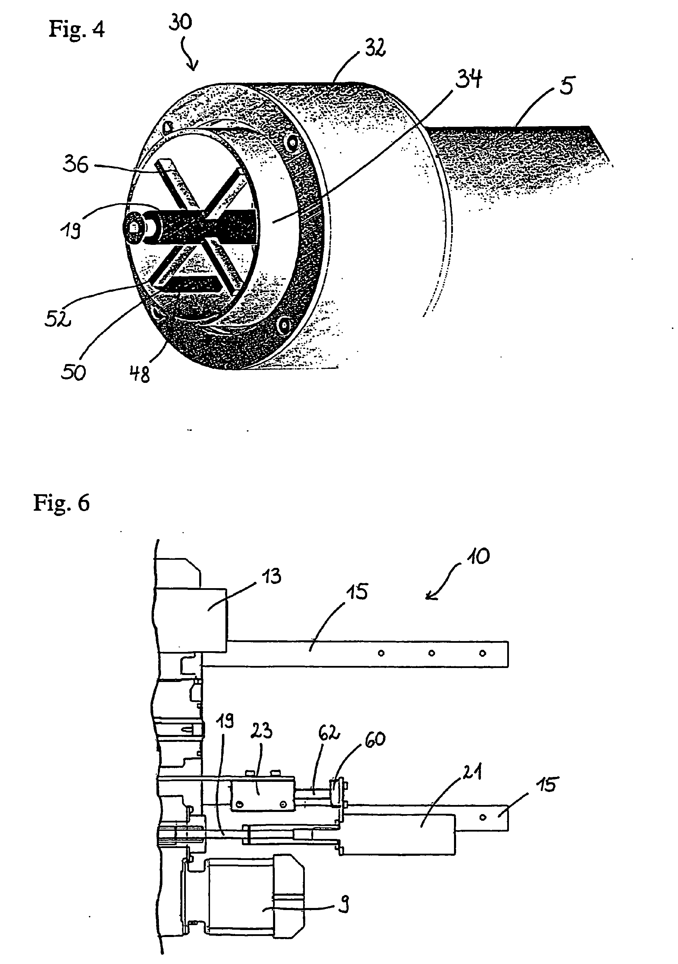

Innerhalb der Hohlwelle 17 der Förderschnecke 7 verläuft koaxial eine Welle 19, die dreh- und verschiebbar innerhalb der Hohlwelle 17 gelagert ist. Die Welle 19 wird durch einen Wellenantrieb 21 angetrieben, der ebenfalls Teil des Antriebsblocks 10 ist. Der Wellenantrieb 21 kann beispielsweise ein Pneumatikmotor sein, dessen Drehzahl und Drehrichtung über eine entsprechende Druckluftzufuhr einstellbar ist. Der Wellenantrieb 21 ist an einen Flansch 60 eines Hubzylinders 23 angeflanscht, so dass der Wellenantrieb 21 durch Ausfahren und Einziehen einer in Fig. 6 dargestellten Hubstange 62 des Hubzylinders 23 in axiale Richtung der Welle 19 verschiebbar ist. Damit kann die Welle 19 innerhalb der Hohlwelle 17 axial verschoben werden.

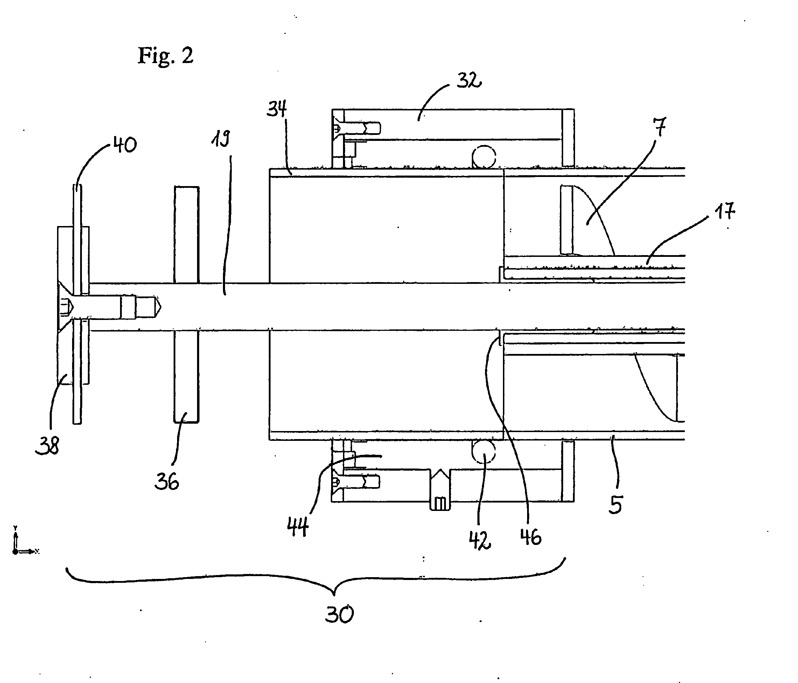

An der Austrittseite des Förderrohres 5 ist ein Feindosierer 30 angeordnet, der über die Welle 19 betätigbar bzw. antreibbar ist. Der Feindosierer 30 umfasst einen Rohrfortsatz 34, der fluchtend zur Vorderkante des Förderrohrs 5 ausgebildet ist, d.h. das Förderrohr 5 zur Austrittseite hin verlängert. Der Rohrfortsatz 34 ist über eine Lagerhülse 32 drehbar am vorderen Ende des Förderrohrs 5 gelagert, wie dies in Fig. 2 im Detail dargestellt ist. Innerhalb der Lagerhülse 32 sind ein Dichtring 42 und ein Gleitlager 44 angeordnet, die den Rohrfortsatz 34 am Förderrohr 5 halten, wobei eine Hinterkante des Rohrfortsatzes 34 der Vorderkante des Förderrohrs 5 nahezu spielfrei auch während der Drehung des Rohrfortsatzes 34 gegenübersteht.

An der Welle 19, die aus der Hohlwelle 17 nach vorne hervorsteht, ist ein Dosierelement 36 - hier in Form eines Rührsterns - angeordnet, welches aufgrund der starren Kopplung zur Welle 19 durch die Drehung der Welle drehbar ist. Am linken Ende der Welle 19 ist ein Stau- bzw. Verschlusselement 38 angeordnet, hier eine Verschlussplatte, welche eine elastische Scheibe 40 als Dichtung beinhaltet. Das Dosierelement 36 sowie das Stau- bzw. Verschlusselement 38 sind starr mit der Welle 19 verbunden, wobei beide durch axiales Einziehen der Welle 19 in Richtung Austrittsöffnung des Rohrfortsatzes 34 verschiebbar sind. Die Welle 19 ist an der Vorderseite gegen die Hohlwelle 17 mittels einer Buchse 46 abgedichtet, die gleichzeitig eine verschleißarme und reibungsminimierende Lagerung bezüglich der axialen Verschiebung und der Rotation der Welle 19 in der Hohlwelle 17 ermöglicht.

Bei der in Fig. 2 gezeigten Stellung der Welle 19 ist der Rohrfortsatz 34 von der Welle 19 entkoppelt, so dass der Rohrfortsatz 34 aufgrund der Haftreibung drehfrei steht. Das Dosierelement 36 ist außerhalb des Rohrfortsatzes 34 angeordnet und das Stau- bzw. Verschlusselement 38 von der von der Austrittsöffnung des Fortsatzes 34 beabstandet. In dieser Stellung kann der Schneckendosierer 1 im Grobdosierbetrieb arbeiten, bei dem die Schnecke 7 mit hoher Drehzahl eine große Förderleistung des Schüttguts erreicht. Während der Grobdosierphase wird der Hauptanteil der zu dosierenden Menge gefördert, bevor zur exakten Einstellung der gewünschten Dosierendmenge auf die Feindosierphase übergegangen wird. Beispielsweise wird in der Grobdosierphase 70 % bis 97 % der gewünschten Endmenge des Schüttguts durch die Förderschnecke 7 gefördert.

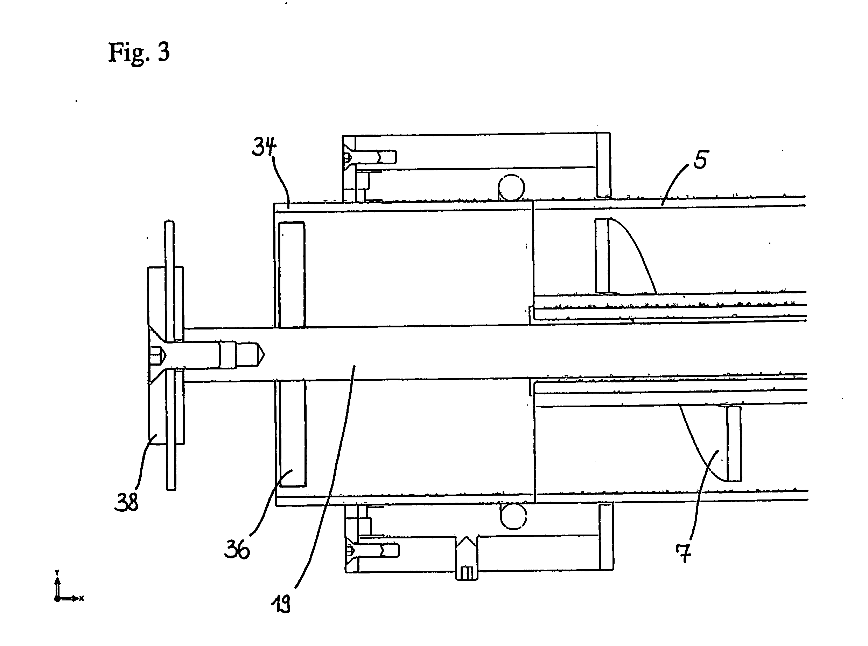

Fig. 3 zeigt die Anordnung von Fig. 2 jedoch in einer Feindosierstellung der Welle 19. In dieser Stellung ist das Dosierelement 36 bis in die Austrittsöffnung des Rohrfortsatzes 34 zurückgezogen und durch die Drehung der Welle 19 bewirkt das Dosierelement 36 eine Umverteilung des Schüttguts im Bereich des Rohrfortsatzes 34. Dadurch stellen sich eine Umverteilung des durch die Schnecke 7 schwallartig angelieferten Materials und eine zeitlich konstantere Materialausgabe ein.

Fig. 4 zeigt eine perspektivische Ansicht des Feindosierers 30 in einem Übergangsstadium zwischen der in Fig. 3 dargestellten Position der Welle 19 und einer etwas weiter zurückgezogenen Position der Welle 19. Zur Veranschaulichung ist in der Darstellung von Fig. 4 das Stau- bzw. Verschlusselement 38 nicht auf die Stirnseite der Welle 19 geschraubt. Ein Mitnehmer 52 (hier ein Flügel) des Dosierelements 36 liegt an einer abgeschrägten Führungs- bzw. Einrastfläche 50 eines Stegs 48 an. Der Steg 48 ist an der Innenfläche des Rohrfortsatzes 34 ausgebildet. Die Führungsfläche 50 führt den Mitnehmer 52 an eine Seitenkante des Stegs 48, falls das Rückziehen der Welle 19 beispielsweise in einer Position erfolgt, in der der Mitnehmer 52 auf die Vorderkante des Stegs 48 treffen würde. Nachdem das Dosierelement 36 etwas weiter in Richtung Förderrohr 5 zurückgezogen ist, liegt einer der Mitnehmer 52 während der Drehung der Welle 19 an einer Seitenkante des Stegs 48 an, so dass durch die Drehbewegung des Dosierelements 36 der Rohrfortsatz 34 in Drehbewegung versetzt wird. Somit kann durch Ausfahren der Welle 19 aus dem Förderrohr bzw. durch Einziehen der Welle 19 über das Dosierelement 36 und den Steg 48 eine einfache Auskopplung bzw. Einkopplung der Drehbewegung des Rohrfortsatzes 34 an die Drehbewegung der Welle 19 erfolgen. Durch die Drehung des Rohrfortsatzes 34 kann zusätzlich zum Verrühren mittels des Dosierelements 36 (siehe oben) eine gleichmäßigere Verteilung des Schüttgutes auf die Länge des Rohrfortsatzes erfolgen, so dass auch der Auswurf des Schüttgutes aus dem sich drehenden Rohrfortsatz gleichmäßig wird.

Bei der dargestellten Ausführung kann während eines Feindosiermodus zeitlich versetzt zunächst das Dosierelement allein eingezogen und wirksam werden und anschließend durch weiteres Einziehen auch der Rohrfortsatz angetrieben werden. Vorteil ist hierbei, dass beide unabhängig von der Drehzahl und der Drehrichtung der Schnecke 7 antreibbar sind. In weiterer, nicht dargestellter Ausführung kann die Welle 19 selbst als Hohlwelle ausgebildet sein, wobei das Dosierelement 36 mit der innersten Welle verbunden ist und der Fortsatz dauerhaft oder über eine Kupplung mit dem äußeren Teil der Welle 19 verbunden ist. Oder umgekehrt ist das Dosierelement an den äußeren Teil der Welle 19 gekoppelt, während der Rohrfortsatz 34 mit der innersten Welle verbunden oder verbindbar ist. In Ausgestaltung des Fördermodus können das Dosierelement 36 und/oder der Rohrfortsatz bereits während der Grobförderphase angetrieben werden; beispielsweise mit einer zur Feinförderphase unterschiedlichen Antriebsgeschwindigkeit.

In hier nicht dargestellter Ausgestaltung kann das Dosierelement 36 als zusätzliche Rühreinrichtung weggelassen werden und stattdessen lediglich ein Kopplungselement zum Verbinden und Lösen der Drehbewegung zwischen der Welle 19 und dem Rohrfortsatz 34 vorgesehen sein. In weiterer Ausgestaltung ist lediglich das Dosierelement 36 als vorderseitige Verteilungseinrichtung vorgesehen, während der Rohrfortsatz weggelassen ist, oder es ist eine starre Verlängerung des Förderrohrs 5 nach der Förderschnecke 7 vorgesehen.

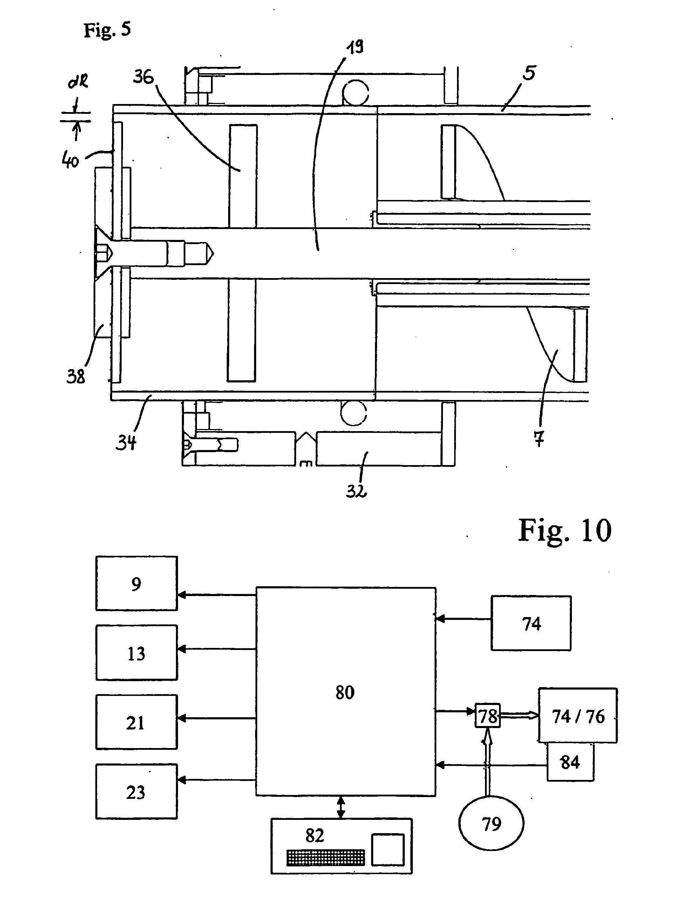

Fig. 5 zeigt den Feindosierer 30 in einer vierten Stellung, bei der die Welle 19 soweit in die Hohlwelle 17 zurückgezogen ist, dass das Stau- bzw. Verschlusselement 38 den Austritt am Rohrfortsatz 34 weitgehend verschließt. Wie dargestellt, verbleibt ein Spalt dR zwischen der elastischen Scheibe 40 und der Innenseite des Rohres 5. Der Spalt dR erleichtert das Schließen nach dem Feindosieren, ist jedoch klein genug, dass das Schüttgut aufgrund der Selbsthemmung nicht mehr aus dem Rohr 5 austritt. In hier nicht dargestellter Ausgestaltung kann die elastische Scheibe 40 bündig bzw. elastisch gegen die Innenwand des Rohrfortsatzes 34 anliegen, so dass der Austrittsquerschnitt des Rohrfortsatzes vollständig abgeschlossen ist. Durch das vollständige Heranfahren der elastischen Scheibe 40 an die Austrittsöffnung kann jede weitere Abgabe des Schüttguts aus der Austrittsöffnung abgestellt werden. Damit kann am Ende einer Feindosierphase, die bei der in Fig. 3 bzw. in Fig. 4 dargestellten Stellung erfolgt, mit dem Erreichen der gewünschten Endmenge des zu dosierenden Materials jede weitere Nachlieferung aus dem Förderrohr 5 abrupt gestoppt werden. Dadurch lässt sich eine sehr präzise Dosierung auf die Endmenge erzielen.

Fig. 6 zeigt den Antriebsblock 10 des Schneckendosierers 1 in einer Stellung, bei der die Welle 19 maximal aus der Hohlwelle 17 zurückgezogen ist, so dass die Position des Feindosierers der in Fig. 5 dargestellten Stellung entspricht. Beim Hubzylinder 23 ist dabei die Hubstange 62 maximal nach rechts (wie in Fig. 6 dargestellt) ausgefahren, so dass der Wellenantrieb 21 mit der daran angekoppelten Welle 19 maximal nach rechts ausgelenkt ist. Die Zwischenstellung zwischen der Fig. 2 (siehe eingefahrene Hubstange 62 wie in Fig. 1 dargestellt) und der in Fig. 5 und 6 dargestellten Stellung gemäß der Figuren 3 und 4 wird durch entsprechendes Anfahren der Zwischenstellungen des Hubzylinders 23 erreicht.

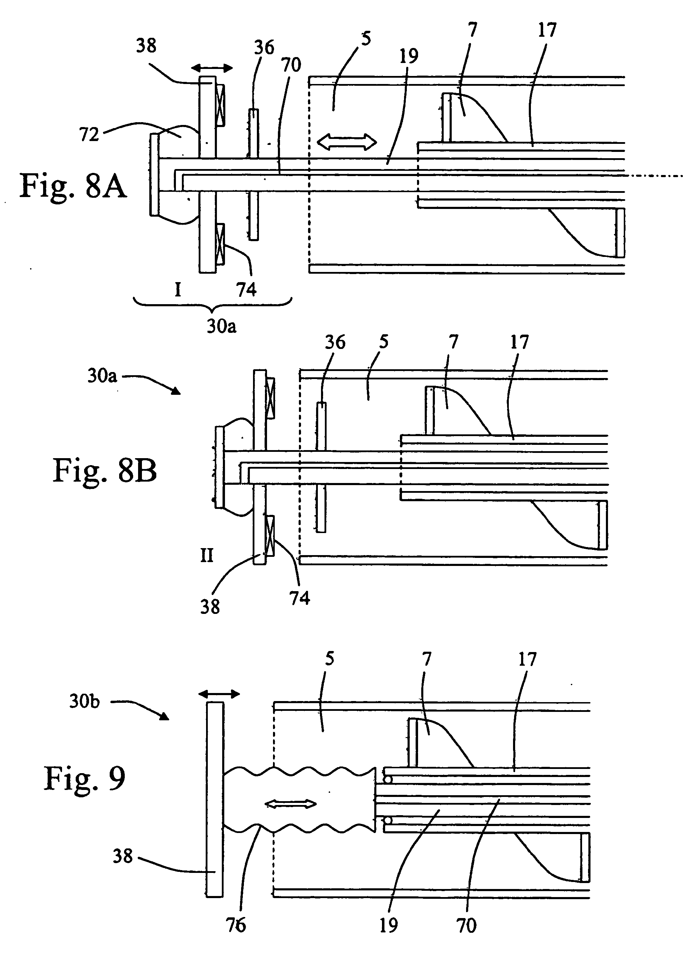

Fig. 8A und 8B zeigen Querschnittansichten eines Feindosierers 30a in einer weiteren Ausgestaltung. Gleiche oder gleichwirkende Elemente sind mit den gleichen Bezugszeichen wie in den zuvor beschriebenen Abbildungen versehen. In Fig. 8A ist der Feindosierer 30a aufgrund der weit herausgefahrenen Welle 19 in seiner voll geöffneten Stellung oder Grobdosierstellung I. In dieser Position wird der Massenfluss des durch das Förderrohr 5 geförderten und daraus ausgeworfenen Schüttguts durch den Feindosierer nicht beeinflusst und hängt somit von der Transportgeschwindigkeit der Schnecke 7 ab. Es kann jedoch in weiterer Ausführung vorgesehen sein, dass die Position des Feindosierers in der Grobdosierstellung I so gewählt ist, dass in dieser ebenfalls eine Vergleichmäßigung des Materialauswurfs durch die Rührtätigkeit des Dosierelements 36 und/oder durch die Hemmwirkung des Stauelements 38 erfolgt.

Es wurde gefunden, dass für eine Vergleichmäßigung des Materialauswurfs in der Grobdosierphase in der Stellung I das Stauelement 38 vorzugsweise so positioniert ist, dass der Austrittsquerschnitt des Förderrohres 5 nicht vollständig freigegeben ist. Der Abstand ist so gewählt, dass bei einem schwallartigen Vorschub des Materials durch die Austrittsöffnung dieses teilweise gegen das Stauelement 38 anliegt und nicht sofort in einen Mischbehälter herausfällt. Das so zunächst noch zurückgehaltene Material wird allmählich abgegeben, so dass eine zeitliche Verteilung des Materialschwalls auftritt und eine Regelung oder Abstellung des Materialtransports (bei Erreichen der vorgegebenen Dosiermenge in der entsprechenden Grobdosier-/Feindosierphase) präziser umgesetzt werden kann. Vorzugsweise wird in der Grobdosierstellung des Stauelements 38 höchstens 80% des Austrittsquerschnitts des Förderrohres freigegeben, vorteilhaft höchstens 70%, 60% oder 50%. Alternativ oder zusätzlich beträgt der Abstand des Stauelements 38 zur Austrittsfläche maximal das 1-fache, das 0,8-fache, das 0,6-fache oder das 0,4-fache der oder einer Querschnittsabmessung der Austrittsfläche.

Fig. 8B zeigt den Feindosierer 30a in seiner Feindosierstellung II am Förderrohr 5. Dabei ist der Austrittsquerschnitt für den Austritt des Förderguts gegenüber der Grobdosierstellung I deutlich verkleinert. In der Feindosierstellung II ist der Austrittsquerschnitt gegenüber dem Austrittsquerschnitt in der Grobdosierstellung I um mindestens 30% verkleinert, vorzugsweise um mindestens 50%, 70% oder 80%. Durch die Stellung des Stauelements 38 wird ein schwallweiser Austritt des Förderguts verhindert. Vorzugsweise wird das Stauelement 38 durch die Welle 19 gedreht, so dass eine weitere Verstetigung des Materialflusses eintritt. Bei der dargestellten Ausgestaltung ist zusätzlich der Dosierstern 36 vorgesehen, der noch im Endstück des Förderrohres 5 eine Lockerung und Verteilung des Schüttguts im Endstück bewirkt.

Das Stauelement 38 kann durch axiales Verschieben in eine hier nicht dargestellte Schließstellung überführt werden, bei der der Austrittquerschnitt noch weiter reduziert oder vollständig geschlossen ist. Bei einer Reduktion des Austrittsquerschnitts ist dieser gegenüber der Feindosierstellung um mindestens 40% reduziert, vorzugsweise um mindestens 50%, 60% oder 70%. Selbst bei nicht vollständig geschlossenem Austrittsquerschnitt tritt aufgrund der Selbsthemmung des Schüttguts eine Unterbrechung des Materialflusses ein, wobei die Schließstellung zum Abschließen eines Dosiervorgangs (die gewünschte Menge an Schüttgut wurde aus dem Förderrohr ausgeworfen) angefahren wird.

Beim Feindosierer 30a ist das Stauelement 38 verschiebbar auf der Welle 19 gelagert und die Verschiebung entlang der Welle erfolgt mittels einer Druckkammer bzw. eines Aktuators 72, die aus einem durch die Welle geführten Druckluftkanal 70 mit Druckluft beaufschlagt wird. Die druckluftbetätigte Verschiebung erfolgt wie dargestellt nach rechts und die Rückstellung des Stauelements 38 erfolgt durch das elastische Zusammenziehen der Gummiwände des Aktuators 72. Das Verschieben des Stauelements 38 erfolgt bei der dargestellten Ausführung zur Feineinstellung des Abstandes des Stauelements zur Öffnung des Förderrohres 5, während die Grobpositionierung durch axiales Verschieben der Welle 19 erfolgt. Die Feinverschiebung kann auch zur Regelung des Materialflusses während der Grob- und/oder Feindosierphase (Stellungen I/II) verwendet werden - vergleiche Fig. 10. In weiterer Ausgestaltung erfolgt auch die Überführung zwischen den Stellungen I und II sowie ggf. in eine Schließstellung mittels Druckbeaufschlagung des Aktuators 72, während die Welle 19 selbst nicht axial verschoben wird (vgl. Fig. 9).

Am Stauelement 38 ist ein Drucksensor 74 angeordnet, mit dem der durch das geförderte Schüttgut gegen das Stauelement 38 wirkende (Rück-)Stau aufgenommen wird. Aufgrund des erfassten Drucks lassen sich die Förderbedingungen und damit indirekt der Materialfluss erfassen, so dass eine Regelung der Transportvorgänge zur Einstellung eines gleichmäßigen Materialflusses ermöglicht wird.

Fig. 9 zeigt eine weitere Ausgestaltung eines Feindosierers 30b, wobei wiederum gleiche oder gleichwirkende Elemente mit den gleichen Bezugszeichen wie in den vorhergehenden Ausführungsbeispielen versehen sind. Die axiale Verschiebung des Stauelements 38 erfolgt hier mittels eines druckluftbeaufschlagten Wellbalgs bzw. mittels eines druckproportional arbeitenden Stellelements 76. Die axiale Verstellung kann zusätzlich oder alternativ zur axialen Verschiebung der Welle 19 erfolgen. Die Druckluft wird wiederum durch den Druckluftkanal 70 in der Welle zugeführt bzw. entspannt. Mit steigendem Druck dehnt sich das Stellelement 76 nach links aus (wie dargestellt) und mit fallendem Druck zieht sich das Stellelement 76 nach rechts zusammen. Durch Konstanthalten des Drucks wird die axiale Grundstellung des Stauelements 38 vorgegeben. Wie in der Ausführung der Fig. 8A und 8B dargestellt, ist das Stauelement 38 elastisch gelagert. Bei Aufbau eines Rückstaudrucks gegen das Stauelement 38 gibt das Stellelement elastisch nach und es vergrößert sich dadurch der Austrittsquerschnitt. Besonders in der Anlaufphase des Materialtransports (nach dem Einschalten der Schnecke 7) wird ein Aufschieben des Materials am Austritt des Förderrohres 5 verringert und führt so wiederum zu einem gleichmäßigeren Materialauswurf.

Fig. 10 stellt schematisch ein Blockdiagramm der Steuerung des Schneckendosierers 1 dar. Eine Steuereinheit 80 liefert (soweit vorgesehen) die Steuersignale für den Schneckenantrieb 9, den Rührerantrieb 13, den Wellenantrieb 21 und den Hubzylinder 23. Parameter für die Art des verwendeten Schüttguts, den Materialfluss in der Grob- und Feindosierphase, die in den Phasen zu dosierenden Mengen usw. werden durch einen Bediener an der Eingabe-/Ausgabeeinheit 82 eingegeben. Statusdaten des Dosierers 1 lassen sich dort an einem Monitor abrufen. Die Steuereinheit 80 empfängt das Sensorsignal vom Sensor 74 und verarbeitet dieses, um eine Feineinstellung des Stauelements 38 in den Grundstellungen I/II während der Grob-/Feindosierphase zu regeln. Dazu wird über ein Ventil 78 ein durch die Steuereinheit 80 berechneter Druck aus einer Druckluftquelle 79 eingestellt. Beispielsweise wird entweder Druckluft aus der Druckluftquelle 79 in den Aktuator 72 oder das Stellelement 76 bis zum Vorgabewert zugeleitet oder es wird daraus Druck abgelassen.

In weiterer Ausgestaltung ist dem Aktuator oder dem Stellelement ein Wegaufnehmer 84 oder ein Positionsaufnehmer zugeordnet und dessen Signal wird ebenfalls der Steuereinheit 80 zugeführt. Damit ist es möglich das Erreichen der vorgegebenen Position und ggf. der Auslenkung des Stauelements 38 aus der Grundposition zu erfassen und zum korrekten Einstellen der Grundposition zu verwenden. Alternativ oder zusätzlich zum Signal des Druckaufnehmers 74 kann das Signal der Auslenkung des Stauelements 38 aus der Grundstellung (Grobdosierstellung und/oder Feindosierstellung) als Regelsignal zum Regeln der durch die Förderschnecke 7 geförderten Schüttgutmenge und/oder zum Regeln des Antriebs des Stauelements (Drehen, Erregen und/oder Vibrieren) in der Steuereinheit 80 verarbeitet werden.

### BEZUGSZEICHENLISTE:

- 1: Schneckendosierer
- 3: Vorratsbehälter
- 4: Rückwand
- 5: Förderrohr
- 6: Bodenrinne
- 7: Förderschnecke
- 9: Schneckenantrieb
- 10: Antriebsblock
- 11: Rührer
- 13: Rührerantrieb
- 15: Schiene
- 17: Hohlwelle
- 19: Welle
- 21: Wellenantrieb
- 23: Positioniereinheit
(Hubzylinder)
- 30, 30a, 30b: Feindosierer
- 32: Lagerhülse
- 34: Rohrfortsatz
- 36: Dosierelement
- 38: Stau- bzw.
Verschlusselement
- 40: elastische Scheibe
- 42: Dichtring
- 44: Gleitlager
- 46: Buchse
- 48: Steg
- 50: Führungsfläche
- 52: Mitnehmer
- 60: Flansch
- 62: Hubstange
- 70: Druckluftkanal
- 72: Aktuator
(Druckkammer)
- 74: Druckaufnehmer
- 76: Stellelement (Wellbalg)
- 78: Ventil
- 79: Druckluftquelle
- 80: Steuereinheit
- 82: Eingabe-/
Ausgabeeinheit
- 84: Wegaufnehmer

## Patentansprüche

1. Dosiervorrichtung zum Dosieren von Material, insbesondere von Schüttgut, mit:
einem Förderkanal (5) zum Überführen von zu dosierendem Material von der Eintrittseite zur Austrittseite des Förderkanals,
einer im Förderkanal (5) angeordneten Schnecke (7) zum Fördern des zu dosierenden Materials im Förderkanal,
einer Antriebseinrichtung (9) zum Antreiben der Schnecke (7),
zumindest einer im Bereich der Austrittseite des Förderkanals (5) angeordneten Dosierhilfseinrichtung (30, 30a, 30b), und
einer Positioniereinheit (19, 21, 23; 70, 76) zum Verändern der Stellung der Dosierhilfseinrichtung (30, 30a, 30b) an der Austrittsseite des Förderkanals (5),
wobei die Dosierhilfseinrichtung (30, 30a, 30b) durch die Positioniereinheit (19, 21, 23; 70, 76) in zumindest zwei vorgegebenen Öffnungsstellungen oder um die Grundposition einer Öffnungsstellung positionierbar ist, insbesondere in zumindest einer Grobdosierstellung (I) und/oder zumindest einer Feindosierstellung (II) positionierbar ist;
**dadurch gekennzeichnet, dass**
beim Betrieb der Förderkanal (5) nur teilweise mit zu dosierendem Material gefüllt ist und die Schnecke (7) das zu dosierende Material im Bodenbereich des Förderkanals (5) nach vorne zur Austrittsseite des Förderkanals schiebt und das zu dosierende Material schwallartig fördert;
die Dosierhilfseinrichtung (30, 30a, 30b) ein Rührelement (36) aufweist; und
das Rührelement (36) in den Förderkanal (5) einfahrbar ist zur Umverteilung des durch die Schnecke schwallartig angelieferten Materials.

2. Dosiervorrichtung nach Anspruch 1, wobei das Rührelement (36) sternschrauben-, spiral- oder gitterförmig ist.

3. Dosiervorrichtung nach Anspruch 1 oder 2, wobei weiterhin die Dosierhilfseinrichtung (30, 30a, 30b) durch die Positioniereinrichtung (19, 21, 23; 70, 76) in einer Verschließstellung zum Verschließen des Förderkanals (5) positionierbar ist.

4. Dosiervorrichtung nach Anspruch 1, 2 oder 3, wobei zumindest zwei axiale Stellungen (I, II), vorzugsweise zumindest drei axiale Stellungen, mittels der Positioniereinheit (19, 21, 23; 70, 76) einstellbar sind.

5. Dosiervorrichtung nach Anspruch 1, 2, 3 oder 4, wobei die Dosierhilfseinrichtung (30, 30a, 30b) durch die Positioniereinheit (19, 21, 23) antreibbar ist, insbesondere drehbar, erregbar und/oder vibrierbar ist.

6. Dosiervorrichtung nach einem der vorhergehenden Ansprüche, wobei die Positioniereinheit (19, 21, 23; 70, 76) zumindest ein durch den Förderkanal (5) geführtes Antriebselement (19) und/oder zumindest eine Leitung (70) für ein Antriebsmedium oder für Antriebssignale aufweist, wobei insbesondere das Antriebselement (19) eine zumindest teilweise durch den Förderkanal (5) geführte Welle, Stange oder ein längenveränderliches Stellelement (76) ist.

7. Dosiervorrichtung nach einem der vorhergehenden Ansprüche, wobei die Dosierhilfseinrichtung (30, 30a, 30b) ein Stauelement (38), ein Drosselelement (40) oder ein Rückhalteelement ist oder aufweist.

8. Dosiervorrichtung nach einem der vorhergehenden Ansprüche, wobei die Dosierhilfseinrichtung (30a) einen Sensor (74) aufweist, insbesondere einen Kraft- oder Druckaufnehmer.

9. Dosiervorrichtung nach einem der vorhergehenden Ansprüche, mit einer Steuereinrichtung (80) zum Steuern der Positioniereinrichtung (19, 21, 23; 70, 76), insbesondere zum Steuern nach einem Verfahren gemäß den Ansprüchen 17 bis 23.

10. Dosiervorrichtung nach einem der vorhergehenden Anspruche, wobei die Dosierhilfseinrichtung (30, 30a, 30b) ein zweites Förderelement (34) aufweist.

11. Dosiervorrichtung nach einem der vorhergehenden Ansprüche, wobei die Positioniereinheit (19, 21, 23; 70, 76) einen Drehantrieb (21), einen Pneumatikantrieb und/oder eine Hubeinrichtung (23) aufweist.

12. Dosiervorrichtung nach einem der vorhergehenden Ansprüche, wobei das Antriebselement (19) über eine Kupplungs- oder Kopplungseinrichtung mit der Antriebseinrichtung (9) für die Schnecke (7) verbindbar oder verbunden ist.

13. Dosiervorrichtung nach einem der vorhergehenden Ansprüche, wobei das Antriebselement (19) aus dem Förderkanal (5) und/oder der Schnecke (7) herausziehbar ist, insbesondere an einer Auszugsvorrichtung (10, 15) gelagert ist.

14. Dosiervorrichtung nach einem der vorhergehenden Ansprüche, wobei der Positioniereinheit (19, 21, 23; 70, 76) und/oder der Dosierhilfseinrichtung (30, 30a, 30b) ein Weg- oder Positionsaufnehmer (84) zugeordnet, mit dem das Anfahren und/oder zumindest das Erreichen der vorgegebenen Öffnungsstellung kontrollierbar oder regelbar ist.

15. Dosiervorrichtung nach einem der vorhergehenden Ansprüche, wobei das Rührelement (36) in Abhängigkeit eines vorgegebenen Materialflusses des zu dosierenden Materials in zumindest einer vom Materialfluss abhängigen und/oder einer den Materialfluss bestimmenden Stellung positionierbar ist.

16. Dosiervorrichtung nach einem der vorhergehenden Ansprüche, wobei das Rührelement (36) in Abhängigkeit der Art und Konsistenz des Schüttguts positionierbar ist.

17. Verfahren zum Betrieb einer Dosiervorrichtung (1) zum Dosieren von förderfähigern Gut, insbesondere zum Betrieb einer Dosiervorrichtung nach einem der vorhergehenden Ansprüche, wobei:
während eines Grobdosierungsvorgangs eine Dosierhilfseinrichtung (30, 30a, 30b) an der Austrittseite eines Förderkanals (5) in einer Grobdosierstellung (I) positioniert ist, um einen hohen Materialfluss des im Förderkanal geförderten Guts zu ermöglichen, und
während eines Feindosiervorgangs die Dosierhilfseinrichtung (30, 30a, 30b) an der Austrittseite des Förderkanals (5) in einer Feindosierstellung (II) positioniert ist, um einen geringeren Materialfluss des geförderten Guts zu vergleichmäßigen,
wobei die Dosierhilfseinrichtung (30, 30a, 30b) ein Rührelement (36) aufweist,
wobei im Förderkanal (5) eine Förderschnecke (7) angeordnet ist, die das förderfähige Gut im Bodenbereich des Förderkanals (5) nach vorne schiebt und schwallartig fördert, und
wobei in der Feindosierstellung (II) das Rührelement (36) in den Förderkanal (5) eingefahren ist und das schwallartig durch die Förderschnecke (7) geförderte Gut umverteilt.

18. Verfahren nach Anspruch 17, wobei mit oder bei Abschluss eines Dosiervorgangs die Dosierhilfseinrichtung (30, 30a, 30b) in einer Schließstellung den Förderkanal (5) verschließt oder ein Entweichen des Guts aus dem Förderkanal hemmt oder zumindest weitgehend hemmt.

19. Verfahren nach Anspruch 17 oder 18, wobei die Grobdosierstellung (I) und/oder die Feindosierstellung (II) in Abhängigkeit des geförderten Guts und/oder den Fördereigenschaften des geförderten Guts veränderbar ist oder verändert wird.

20. Verfahren nach Anspruch 17, 18 oder 19, wobei während des Grobdosiervorgangs und/oder während des Feindosiervorgangs der Materialfluss überwacht wird, insbesondere mittels einer an der Dosierhilfseinrichtung (30, 30a, 30b) angeordneten Sensoreinrichtung (74) erfasst wird.

21. Verfahren nach einem der Ansprüche 17 bis 20, wobei während des Feindosiervorgangs und/oder des Grobdosiervorgangs die Dosierhilfseinrichtung (30, 30a, 30b) angetrieben wird, insbesondere gedreht, erregt und/oder vibriert wird.

22. Verfahren nach einem der Ansprüche 17 bis 21, wobei während des Feindosiervorgangs und/oder des Grobdosiervorgangs zumindest ein Element (36, 38, 40) der Dosierhilfseinrichtung (30, 30a, 30b) der Austrittseite des Förderkanals beigestellt wird.

23. Verfahren nach einem der Ansprüche 17 bis 22, wobei während des Feindosiervorgangs, insbesondere kurz vor dem Ende des Feindosiervorgangs, die Förderschnecke (7) zumindest zeitweise abgestellt ist

## Claims

1. Dosing apparatus for dosing material, in particular bulk material, comprising:
a conveying channel (5) for transferring material to be dosed from the inlet side to the outlet side of the conveying channel,
a screw (7) disposed in the conveying channel (5) for conveying the material to be dosed in the conveying channel,
a driving device (9) for driving the screw (7),
at least one supplementary dosing device (30, 30a, 30b) disposed in a region of the outlet side of the conveying channel (5), and
a positioning unit (19, 21, 23; 70, 76) for varying the position of the supplementary dosing device (30, 30a, 30b) at the outlet side of the conveying channel (5),
wherein the supplementary dosing device (30, 30a, 30b) is adapted to be positioned by the positioning unit (19, 21, 23; 70, 76) in at least two predetermined opening positions or about the basic position of an opening position, in particular is adapted to be positioned in at least one coarse dosing position (I) and/or at least one fine dosing position (II);
**characterized in that**
during operation the conveying channel (5) is only partially filled with material to be dosed, and the screw (7) pushes the material to be dosed at the bottom area of the conveying channel (5) forward towards the outlet side of the conveying channel and conveys the material to be dosed surge-like;
the supplementary dosing device (30, 30a, 30b) comprises an agitation element (36); and
the agitation element (36) is retractable into the conveying channel (5) for redistribution of the material, which is delivered surge-like by the screw.

2. Dosing apparatus according to claim 1, wherein the agitation element (36) is star-shaped, helical, spiral- or grid-shaped.

3. Dosing apparatus according to claim 1 or 2, wherein further the supplementary dosing device (30, 30a, 30b) is adapted to be positioned by the positioning device (19, 21, 23; 70, 76) in a closed position for closing the conveying channel (5).

4. Dosing apparatus according to claim 1, 2 or 3, wherein at least two axial positions (I, II), preferably at least three axial positions, are adjustable by the positioning unit (19, 21, 23; 70, 76).

5. Dosing apparatus according to claim 1, 2, 3 or 4, wherein the supplementary dosing device (30, 30a, 30b) is adapted to be driven by the positioning unit (19, 21, 23), is in particular adapted to be rotated, actuated and/or vibrated.

6. Dosing apparatus according to any of the previous claims, wherein the positioning unit (19, 21, 23; 70, 76) comprises at least one driving element (19) running through the conveying channel (5) and/or at least one conduit (70) for a driving medium or for driving signals, wherein in particular the driving element (19) is a shaft, rod or a lengthwise adjustable actuator (76) at least partially running through the conveying channel (5).

7. Dosing apparatus according to any of the previous claims, wherein the supplementary dosing device (30, 30a, 30b) is or comprises a damming element (38), a throttling element (40) or a retaining element.

8. Dosing apparatus according to any of the previous claims, wherein the supplementary dosing device (30a) comprises a sensor (74), in particular a force or pressure sensor.

9. Dosing apparatus according to any of the previous claims, comprising a control device (80) for controlling the positioning device (19, 21, 23; 70, 76), in particular for controlling according to a method of claims 17 to 23.

10. Dosing apparatus according to any of the previous claims, wherein the supplementary dosing device (30, 30a, 30b) comprises a second conveying element (34).

11. Dosing apparatus according to any of the previous claims, wherein the positioning unit (19, 21, 23; 70, 76) comprises a rotary drive (21), a pneumatic drive and/or a lifting device (23).

12. Dosing apparatus according to any of the previous claims, wherein the driving element (19) is connectable or connected to the driving device (9) by a coupling or coupler device.

13. Dosing apparatus according to any of the previous claims, wherein the driving element (19) is extractable from the conveying channel (5) and/or the screw (7), in particular is disposed at a pull-out device (10, 15).

14. Dosing apparatus according to any of the previous claims, wherein a path or position sensor (84) is associated with the positioning unit (19, 21, 23; 70, 76) and/or the supplementary dosing device (30, 30a, 30b), with which the approaching and/or at least the reaching of the predetermined opening position is controllable or adjustable.

15. Dosing apparatus according to any of the previous claims, wherein the agitation element (36) is adapted to be positioned in dependency of a predetermined material flow of the material to be dosed in at least one position being dependent on the material flow and/or determined by the material flow.

16. Dosing apparatus according to any of the previous claims, wherein the agitation element (36) is adapted to be positioned in dependency of the type and consistency of the bulk material.

17. Method for operating a dosing apparatus (1) for dosing of conveyable good, in particular for operating a dosing apparatus according to any of the previous claims,
wherein:
during a coarse dosing process a supplementary dosing device (30, 30a, 30b) is positioned at the outlet side of a conveying channel (5) in a coarse dosing position (I) for enabling a high material flow of good conveyed in the conveying channel, and
during a fine dosing process the supplementary dosing device (30, 30a, 30b) is positioned at the outlet side of a conveying channel (5) in a fine dosing position (II) for homogenizing a reduced material flow of the conveyed good,
wherein the supplementary dosing device (30, 30a, 30b) comprises an agitation element,
wherein a screw conveyor (7) is disposed in the conveying channel (5), which pushes forward and conveys in a surge-like manner the conveyable good at the bottom part of the conveying channel (5), and
wherein in the fine dosing position (II) the agitation element (36) is retracted into the conveying channel (5) and redistributes the good, which is conveyed by the screw conveyor (7) in a surge-like manner.

18. Method according to claim 17, wherein with or during termination of a dosing process the supplementary dosing device (30, 30a, 30b) closes the conveying channel (5) in a closing position or inhibits or at least largely inhibits escaping of the good from the conveying channel.

19. Method according to claim 17 or 18, wherein the coarse dosing position (I) and/or the fine dosing position (II) is variable or is varied in dependency of the conveyed good and/or the conveying characteristics of the conveyed good.

20. Method according to claim 17, 18 or 19, wherein during the coarse dosing process and/or during the fine dosing process the material flow is monitored, in particular is detected by a sensor device (74) disposed at the supplementary dosing device (30, 30a, 30b).

21. Method according to any of claims 17 to 20, wherein during the fine dosing process and/or the coarse dosing process the supplementary dosing device (30, 30a, 30b) is driven, in particular is rotated, actuated and/or vibrated.

22. Method according to any of claims 17 to 21, wherein during the fine dosing process and/or the coarse dosing process at least one element (36, 38, 40) of the supplementary dosing device (30, 30a, 30b) is positioned at the outlet side of the conveying channel.

23. Method according to any of claims 17 to 22, wherein during the fine dosing process, in particular close to the end of the fine dosing process, the screw conveyor (7) is at least temporarily stopped.

## Revendications

1. Dispositif de dosage pour doser un matériau, en particulier une matière en vrac, comprenant :
un canal de convoyage (5) pour transférer du matériau, devant être dosé, depuis le côté entrée jusqu'au côté sortie dudit canal de convoyage,
une vis sans fin (7) logée dans le canal de convoyage (5) afin de convoyer, dans ledit canal de convoyage, le matériau devant être dosé,
un système d'entraînement (9) pour entraîner la vis sans fin (7),
au moins un système de dosage auxiliaire (30, 30a, 30b) implanté dans la région du côté sortie du canal de convoyage (5), et
une unité de positionnement (19, 21, 23 ; 70, 76) pour modifier la position du système de dosage auxiliaire (30, 30a, 30b) du côté sortie du canal de convoyage (5),
ledit système de dosage auxiliaire (30, 30a, 30b) pouvant être positionné, par l'unité de positionnement (19, 21, 23 ; 70, 76), dans au moins deux positions d'ouverture préétablies ou au voisinage de l'emplacement de base d'une position d'ouverture, et pouvant notamment être positionné dans au moins une position (I) de dosage grossier et/ou dans au moins une position (II) de dosage fin ;
**caractérisé par le fait que**
le canal de convoyage (5) n'est empli que partiellement, en service, par du matériau devant être dosé, et la vis sans fin (7) exerce une poussée vers l'avant sur ledit matériau devant être dosé, dans la région du fond dudit canal de convoyage (5), et convoie par vagues ledit matériau devant être dosé ;
le système de dosage auxiliaire (30, 30a, 30b) présente un élément agitateur (36) ; et
ledit élément agitateur (36) peut être introduit dans le canal de convoyage (5), en vue de la répartition du matériau délivré par vagues au moyen de la vis sans fin.

2. Dispositif de dosage selon la revendication 1, dans lequel l'élément agitateur (36) est en forme d'étoile, de vis, de spirale ou de grille.

3. Dispositif de dosage selon la revendication 1 ou 2, dans lequel le système de dosage auxiliaire (30, 30a, 30b) peut par ailleurs être positionné dans une position d'obturation, par le système de positionnement (19, 21, 23 ; 70, 76), en vue d'obturer le canal de convoyage (5).

4. Dispositif de dosage selon la revendication 1, 2 ou 3, dans lequel au moins deux positions axiales (I, II), de préférence au moins trois positions axiales, peuvent être réglées au moyen de l'unité de positionnement (19, 21, 23 ; 70, 76).

5. Dispositif de dosage selon la revendication 1, 2, 3 ou 4, dans lequel le système de dosage auxiliaire (30, 30a, 30b) peut être mené par l'unité de positionnement (19, 21, 23), notamment en mode rotatoire et/ou excitatoire et/ou vibratoire.

6. Dispositif de dosage selon l'une des revendications précédentes, dans lequel l'unité de positionnement (19, 21, 23 ; 70, 76) comporte au moins un élément d'entraînement (19) guidé par le canal de convoyage (5), et/ou au moins un conduit ou conducteur (70) affecté à un fluide d'entraînement ou à des signaux d'entraînement, l'élément d'entraînement (19) se présentant, en particulier, comme un arbre, une tige ou un élément de réglage (76) de longueur variable, guidé(e) au moins partiellement par ledit canal de convoyage (5).

7. Dispositif de dosage selon l'une des revendications précédentes, dans lequel le système de dosage auxiliaire (30, 30a, 30b) est ou comporte un élément d'accumulation (38), un élément d'étranglement (40) ou un élément de retenue.

8. Dispositif de dosage selon l'une des revendications précédentes, dans lequel le système de dosage auxiliaire (30a) présente un détecteur (74), notamment un capteur de forces ou de pressions.

9. Dispositif de dosage selon l'une des revendications précédentes, équipé d'un système de commande (80) en vue de commander le système de positionnement (19, 21, 23 ; 70, 76), notamment en vue de la commande selon un procédé conforme aux revendications 17 à 23.

10. Dispositif de dosage selon l'une des revendications précédentes, dans lequel le système de dosage auxiliaire (30, 30a, 30b) présente un second élément de convoyage (34).

11. Dispositif de dosage selon l'une des revendications précédentes, dans lequel l'unité de positionnement (19, 21, 23 ; 70, 76) comporte un entraînement en rotation (21), un entraînement pneumatique et/ou un système (23) imprimant des courses.

12. Dispositif de dosage selon l'une des revendications précédentes, dans lequel l'élément d'entraînement (19) est ou peut être relié, par l'intermédiaire d'un système d'accouplement ou de couplage, au système d'entraînement (9) dédié à la vis sans fin (7).

13. Dispositif de dosage selon l'une des revendications précédentes, dans lequel l'élément d'entraînement (19) peut être extrait du canal de convoyage (5) et/ou de la vis sans fin (7), et est notamment monté sur un dispositif d'extraction (10, 15).

14. Dispositif de dosage selon l'une des revendications précédentes, dans lequel un détecteur (84) de courses ou d'emplacements, affecté à l'unité de positionnement (19, 21, 23 ; 70, 76) et/ou au système de dosage auxiliaire (30, 30a, 30b), permet de contrôler ou de réguler l'approche de la position d'ouverture préétablie et/ou au moins l'instant auquel ladite position est atteinte.

15. Dispositif de dosage selon l'une des revendications précédentes, dans lequel l'élément agitateur (36) peut être positionné, en fonction d'un flux préétabli du matériau devant être dosé, dans au moins une position tributaire dudit flux de matériau et/ou déterminant ledit flux de matériau.

16. Dispositif de dosage selon l'une des revendications précédentes, dans lequel l'élément agitateur (36) peut être positionné en fonction de la nature et de la consistance de la matière en vrac.

17. Procédé d'actionnement d'un dispositif de dosage (1) conçu pour doser une matière apte au convoyage, notamment en vue d'actionner un dispositif de dosage selon l'une des revendications précédentes, dans lequel :
lors d'un processus de dosage grossier, un système de dosage auxiliaire (30, 30a, 30b) est positionné dans une position (I) de dosage grossier, du côté sortie d'un canal de convoyage (5), pour permettre un flux intense de la matière convoyée dans le canal de convoyage ; et,
lors d'un processus de dosage fin, ledit système de dosage auxiliaire (30, 30a, 30b) est positionné dans une position (II) de dosage fin, du côté sortie dudit canal de convoyage (5), pour uniformiser un flux moins intense de la matière convoyée,
sachant que le système de dosage auxiliaire (30, 30a, 30b) présente un élément agitateur (36),
sachant que le canal de convoyage (5) renferme une vis sans fin convoyeuse (7) qui provoque une poussée vers l'avant et un convoyage par vagues, dans la région du fond dudit canal de convoyage (5), de la matière apte au convoyage, et
sachant que, dans la position (II) de dosage fin, l'élément agitateur (36) est introduit dans ledit canal de convoyage (5) et répartit la matière convoyée, par vagues, par ladite vis sans fin convoyeuse (7).

18. Procédé selon la revendication 17, dans lequel, à l'achèvement ou à l'approche de l'achèvement d'un processus de dosage, le système de dosage auxiliaire (30, 30a, 30b) obture le canal de convoyage (5) dans une position de fermeture et empêche, ou entrave au moins fortement une expulsion de la matière hors dudit canal de convoyage.

19. Procédé selon la revendication 17 ou 18, dans lequel la position (I) de dosage grossier, et/ou la position (II) de dosage fin, peu(ven)t être ou est (sont) modifiée(s) en fonction de la matière convoyée et/ou des propriétés de convoyage de ladite matière convoyée.

20. Procédé selon la revendication 17, 18 ou 19, dans lequel le flux de matériau est surveillé au cours du processus de dosage grossier et/ou au cours du processus de dosage fin, en étant notamment détecté au moyen d'un système de détection (74) implanté sur le système de dosage auxiliaire (30, 30a, 30b).

21. Procédé selon l'une des revendications 17 à 20, dans lequel, au cours du processus de dosage fin et/ou du processus de dosage grossier, le système de dosage auxiliaire (30, 30a, 30b) est entraîné en étant, en particulier, soumis à rotation, à excitation et/ou à vibration.

22. Procédé selon l'une des revendications 17 à 21, dans lequel, au cours du processus de dosage fin et/ou du processus de dosage grossier, au moins un élément (36, 38, 40) du système de dosage auxiliaire (30, 30a, 30b) est assigné au côté sortie du canal de convoyage.

23. Procédé selon l'une des revendications 17 à 22, dans lequel la vis sans fin convoyeuse (7) est au moins partiellement mise à l'arrêt, au cours du processus de dosage fin, notamment peu avant l'achèvement dudit processus de dosage fin.
